# EUROPÄISCHE PATENTSCHRIFT

(11) **EP 1 490 243 B1**
(45) Veröffentlichungstag und Bekanntmachung des Hinweises auf die Patenterteilung: **19.09.2007**
(21) Anmeldenummer: 03744859.4
(22) Anmeldetag: 27.03.2003
(51) Int. Cl.: B60K 37/00

(54) **VORRICHTUNG ZUM HALTEN EINES KOMBIINSTRUMENTS UND INSTRUMENTENTAFEL**
DEVICE FOR MOUNTING AN INSTRUMENT CLUSTER AND DASHBOARD
DISPOSITIF DE MAINTIEN D'UN COMBINE D'INSTRUMENTS ET TABLEAU DE BORD

(30) Priorität: 27.03.2002 DE 10214038
(43) Veröffentlichungstag der Anmeldung: 29.12.2004
(73) Patentinhaber: Faurecia Innenraum Systeme GmbH, 76767 Hagenbach (DE)
(72) Erfinder: DOLL, Volker, 76829 Ranschbach (DE); ADEL, Andreas, 76764 Rheinzabern (DE)
(74) Vertreter: Richardt, Markus Albert
(86) Internationale Anmeldenummer: PCT/EP2003/003191
(87) Internationale Veröffentlichungsnummer: WO 2003/080383

(56) Entgegenhaltungen:
- DE-U- 1 921 386
- FR-A- 2 670 165
- GB-A- 381 825
- US-A- 3 992 070

## Beschreibung

Die Erfindung betrifft eine Vorrichtung zum Halten eines Kombiinstruments, eine Instrumententafel sowie ein Verfahren zur Demontage eines Kombiinstruments.

Aus dem Stand der Technik sind verschiedene Halterungen für Kombiinstrumente sowie Verfahren zur Demontage von Kombiinstrumenten bekannt. Zur Demontage eines Kombiinstruments ist es je nach Fahrzeugtyp im Allgemeinen erforderlich, ein oder mehrere Teile der Innenraumverkleidung zu demontieren, um eine Befestigung des Kombiinstruments an der Instrumententafel zu lösen.

Beispielsweise muss für die Demontage zunächst die untere Cockpitverkleidung abgebaut werden, um das Kombiinstrument zu lösen und es dann aus der Instrumententafel herauszudrücken. Nachteilig ist hierbei der erhebliche Zeit- und Kostenaufwand, der für den Austausch eines defekten Kombiinstruments entsteht.

Aus der DE 37 21 289 A1 ist eine Instrumententafel bekannt, die anstelle eines Kombiinstruments abnehmbar aufgesteckte einzelne Instrumente und Aggregate aufweist. Die Armaturentafel weist hierzu integrierte elektrische Stromleiter auf, die beim Aufstecken der Instrumente bzw. Aggregaten mit diesen zugeordneten elektrischen Anschlüssen kontaktieren. Die Instrumente bzw. Aggregate weisen jeweils einen mit einem zugeordneten Lochausschnitt in der Armaturentafel zusammenwirkenden Befestigungsfuß auf, der einen Halter und eine klippsnasenförmige Spannfeder beinhaltet. Durch diese Art der lösbaren Befestigung lassen sich die Instrumente leicht austauschen.

Nachteilig ist hierbei jedoch das optische Erscheinungsbild des Cockpits sowie die Sicherheit der Fahrzeuginsassen, zum Beispiel im Falle eines Aufpralls, da durch die einzelnen Instrumente eine uneinheitliche und damit aggressive Aufprallfläche gebildet wird. Außerdem können sich einzelne Instrumente bei einem Aufprall lösen, wenn die klipp-nasenförmige Spannfeder den auftretenden Kräften nicht gewachsen ist. Durch sich unkontrolliert im Innenraum des Fahrzeugs bewegende einzelne Instrumente ist in einem solchen Fall ein weiteres erhebliches Verletzungsrisiko gegeben.

Aus der FR-A-2670165 ist ein Instrument nach dem Oberbegriff des Anspruchs 1 mit einem Schnappverbindungselement zur Bildung einer Schnappverbindung mit einem entsprechenden Schnappverbindungselement einer Halterung bekannt. Das Instrument hat eine Feder mit einem Federweg, der einer Entriegelungslänge zur Lösung der Schnappverbindung entspricht.

Der Erfindung liegt daher die Aufgabe zugrunde, eine Vorrichtung zum Halten eines Kombiinstruments und eine Instrumententafel zu schaffen, die eine möglichst leichte Demontage des Kombiinstruments unter Vermeidung der Nachteile des Stands der Technik ermöglicht.

Die der Erfindung zugrunde liegende Aufgabe wird mit den Merkmalen der unabhängigen Patentansprüche jeweils gelöst. Bevorzugte Ausführungsformen der Erfindung sind in den abhängigen Patentansprüchen angegeben.

Diese Aufgabe wird durch die besonderen Merkmale des Vorrichtungsanspruchs 1, des Vorrichtungsanspruchs 11 und des Verfahrensanspruchs 15 gelöst.

Die Erfindung ermöglicht die Demontage eines Kombiinstruments vom Fahrzeuginnenraum aus, ohne dass hierzu größere Teile der Innenraumverkleidung zu demontieren sind. Hierzu wird das Kombiinstrument an seinem Halterahmen mittels einer Schnappverbindung fixiert. Für die Demontage wird diese Schnappverbindung durch einen vom Fahrzeuginnenraum aus zu betätigenden Mechanismus gelöst. Daraufhin findet eine Auswurfbewegung des Kombiinstruments statt, indem eine Betätigungskraft, die ebenfalls von dem Fahrzeuginnenraum aus eingeleitet wird, in Auswurfrichtung umgelenkt wird.

Nach einer bevorzugten Ausführungsform der Erfindung ist ein Schnapphaken oder ein Schnappklipp an dem Halterahmen für das Kombiinstrument angeordnet. Bei der Montage des Kombiinstruments wird dieses von vorne in den Halterahmen geschoben, so dass ein Schnapp-Nocken des Kombiinstruments den Schnapphaken oder -klipp unterfährt, um dann einzurasten.

Gleichzeitig liegt das Kombiinstrument hinten an dem Halterahmen an, so dass es durch den Halterahmen und die Schnappverbindung mechanisch fest und sicher mit der Instrumententafel verbunden ist. Für die Demontage wird diese Schnappverbindung durch einen vom Fahrzeuginnenraum aus zu betätigenden Mechanismus gelöst, indem beispielsweise der Schnappklipp oder -haken in seinem elastisch verformbaren Bereich aufgebogen wird. Der Schnappnocken wird hierdurch freigegeben.

Danach wird ebenfalls vom Fahrzeuginnenraum aus eine Betätigungskraft eingeleitet, um das nunmehr entriegelte Kombiinstrument aus dem Halterahmen herauszuschieben. Vorzugsweise wird das Kombiinstrument hierbei zumindest so weit herausgeschoben, dass es mit bloßen Händen von vorne gefasst, und dann vollständig aus dem Halterahmen des Instrumententrägers herausgezogen werden kann. Zum Beispiel wird das Kombiinstrument durch den Auswurfmechanismus um ca. 10 mm aus der sogenannten Formhaut geschoben.

Nach einer bevorzugten Ausführungsform der Erfindung erfolgt die Lösung der Schnappverbindung durch einen Hebel, der drehbar auf einer Achse gelagert ist, die an dem Halterahmen angeordnet ist. Dieser Hebel hat an einem Ende einen Betätigungsansatz für das Aufbiegen des Schnapphakens oder -klipps, um die Schnappverbindung zu lösen. An seinem anderen Ende ist der Hebel zur Einleitung der Betätigungskraft ausgebildet, um den Betätigungsansatz unter den Schnapphaken oder -klipp zu schieben.

Nach einer bevorzugten Ausführungsform der Erfindung ist dieses Ende des Hebels in dem Montagezustand des Kombiinstruments gegenüber einem Loch in der Instrumententafel angeordnet, durch das beispielsweise ein Schraubendreher hindurchgeführt werden kann. Mittels des Schraubendrehers kann dann von dem Fahrzeuginnenraum aus auf dieses Ende des Hebels eine Betätigungskraft ausgeübt werden, die dazu führt, dass der Betätigungsansatz den Schnapphaken oder -klipp unterfährt und hierdurch aufbiegt, so dass die Schnappverbindung gelöst wird.

Nach einer weiteren bevorzugten Ausführungsform der Erfindung kommt es bei einer weiteren Drehbewegung des Hebels nach dem Lösen der Schnappverbindung zu einem Anschlag eines Querstegs, der an dem Hebel angeordnet ist, an der Rückseite des Kombiinstruments. Über diesen Anschlag wird die von dem Fahrzeuginnenraum über, zum Beispiel den Schraubendreher, auf den Hebel ausgeübte Betätigungskraft in die Auswurfrichtung des Kombiinstruments umgelenkt, so dass das Kombiinstrument aufgrund der gelösten Schnappverbindung aus dem Instrumententräger herausgeschoben wird.

Nach einer weiteren bevorzugten Ausführungsform der Erfindung hat der Betätigungsansatz eine Anlauf-Schräge, die das Unterfahren und Aufbiegen des Schnappelements erleichtert.

Nach einer weiteren bevorzugten Ausführungsform der Erfindung ist in dem Bereich des Anschlags, den der Quersteg des Hebels bei dem Auswurf des Kombiinstruments bildet, ein Federelement, zum Beispiel eine Blattfeder, angeordnet. Das Federelement hat einen Federweg, der zumindest für die Entriegelungsbewegung des Hakens ausreichend ist. Im Montagezustand übt das Federelement auf den Quersteg eine Kraft in eine der Entriegelungsbewegung entgegengesetzte Richtung aus. Hierdurch wird das andere Ende des Hebels gegen einen Anschlag gedrückt, so dass der Hebel im Montagezustand eine eindeutig definierte Lage aufweist und nicht klappern kann. Vorzugweise wird dieser Anschlag durch einen Schnapphaken gebildet.

Bei dieser bevorzugten Ausführungsform der Erfindung erfolgt der Bewegungsablauf für die Entriegelung und den Auswurf des Kombiinstruments so, dass die Betätigungskraft entgegen der Federkraft des Federelements den Hebel in Entriegelungsrichtung bewegt, so dass der Betätigungsansatz das Schnappelement unterfährt und aufbiegt. Nach der vollständigen Lösung der Schnappverbindung entfällt dann die Gegenkraft des Federelements, da es dann an dem zuvor durch die Schnappverbindung gebildeten Widerlager fehlt. Nach der Lösung der Schnappverbindung wird dann das Kombiinstrument aufgrund des zwischen dem Quersteg und dem Kombiinstrument bzw. zwischen dem Quersteg und dem Federelement gebildeten Anschlag herausgeschoben.

Im Weiteren wird eine bevorzugte Ausführungsform der Erfindung mit Bezugnahme auf die Zeichnungen näher erläutert. Es zeigen:
- Figur 1: eine perspektivische Ansicht einer Halterung eines Kombiinstruments bei der Montage,
- Figur 2: eine perspektivische Ansicht der Halterung der Figur 1 in der Grundstellung, dass heißt, in einem Montagezustand,
- Figur 3: eine perspektivische Ansicht der Halterung der Figur 1 nach der Lösung der Schnappverbindung,
- Figur 4: eine perspektivische Ansicht der Halterung der Figur 1 beim Auswurf des Kombiinstruments,
- Figur 5: eine Abwicklung des Entriegelungs- und Auswurfsvorgangs der Figuren 1 bis 4,
- Figur 6: eine Draufsicht auf eine Instrumententafel, in der sich eine Halterung und eine Kombiinstrument gemäß der Figuren 1 bis 5 befindet.

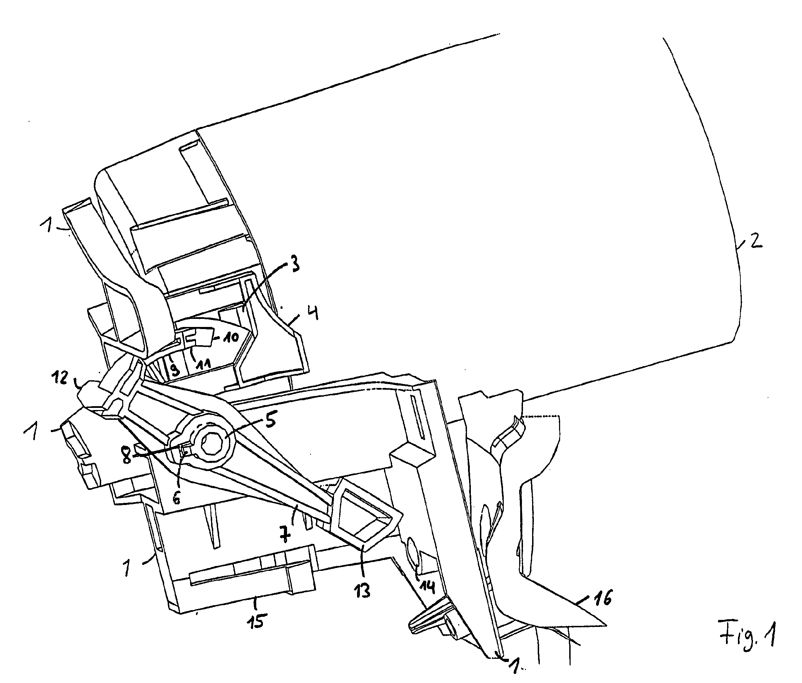

Die Figur 1 zeigt einen Halterahmen 1 für ein Kombiinstrument 2. Das Kombiinstrument 2 hat einen Nocken 3. Bei der Montage des Kombiinstruments 2, das heißt beim Einschieben des Kombiinstruments 2 in den Halterahmen 1, unterfährt der Nocken 3 den Klipp 4 des Halterahmens 1 und rastet dann in der in der Figur 1 gezeigten Position ein.

Nach einer Seite wird dann das Kombiinstrument 2 durch die aus Nocken 3 und Klipp 4 gebildete Schnappverbindung fixiert und nach der anderen Seite durch den Halterahmen 1. Zur Vermeidung einer sogenannten Doppelpassung sind vorzugsweise an dem Halterahmen 1 oder an der hinteren Begrenzung des Kombiinstruments 2 zum Beispiel Gumminoppen oder dergleichen angeordnet.

An dem Halterahmen 1 ist eine Achse 5 mit einer Nase 6 angeordnet. Auf die Achse 5 wird ein Hebel 7 mit einer Nut 8 so aufgesteckt, dass die Nut 8 und die Nase 6 miteinander fluchtend sind.

Der Hebel 7 hat an seinem einen Ende einen Betätigungsansatz 9, welcher zum Lösen der durch die Nocke 3 und den Klipp 4 gebildeten Schnappverbindung dient. Der Betätigungsansatz 9 weist hierzu einen Vorsprung 10 und eine Anlaufschräge 11 auf.

Der Hebel 7 weist an seinem Ende mit dem Betätigungsansatz 9 ferner einen Quersteg 12 auf. Der Quersteg 12 dient zur Bildung eines Anschlags mit der Rückseite des Kombiinstruments 2 bzw. mit einem an der Rückseite des Kombiinstruments 2 angeordneten Federelement, um eine Auswurfkraft auf das Kombiinstrument 2 zu übertragen.

An seinem dem Quersteg 12 und dem Betätigungsansatz 9 gegenüberliegenden Ende hat der Hebel 7 eine Aufnahme 13 zur Aufnahme eines von dem Fahrzeuginnenraum durch ein Loch 14 in der Instrumententafel 15 durchzuführendes Werkzeug, wie zum Beispiel einem Schraubendreher.

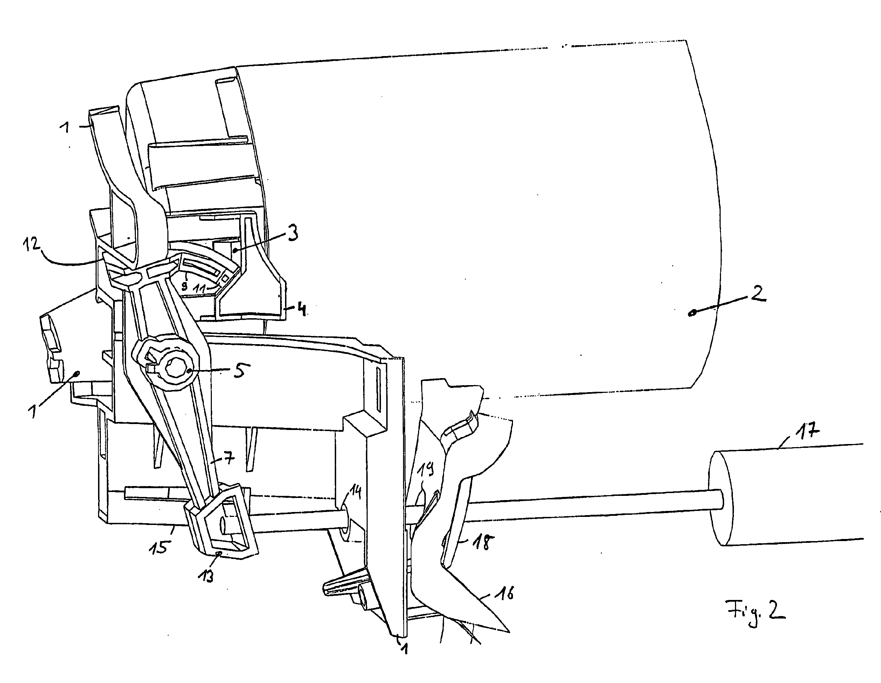

An dem Halterahmen 1 befindet sich ferner ein Schnapphaken 15, welcher zur Fixierung des Hebels 7 in der Grundstellung, das heißt im Montagezustand des Kombiinstruments 2 dient. Dies wird im Folgenden mit Bezugnahme auf die Figur 2 weiter verdeutlicht.

Die Figur 2 zeigt die Ansicht der Figur 1, nachdem der Hebel 7 in Uhrzeigerrichtung bei der Montage gedreht worden ist. Die Drehung ist dabei soweit erfolgt, dass der Vorsprung 10 des Betätigungsansatzes 9 unter den Klipp 4 gefahren worden ist, nicht aber die Anlaufschräge 11, die sich in dem Montagezustand unmittelbar vor dem Klipp 4 befindet.

In dieser Position bildet der Quersteg 12 mit der Rückseite des Kombiinstruments 2 noch keinen Anschlag, sondern er ist von der Rückseite des Kombiinstruments 2 um eine Entriegelungslänge beabstandet. Diese Entriegelungslänge wird vorzugsweise durch ein in der Figur 2 nicht dargestelltes Federelement überbrückt, welches in dem Montagezustand eine Kraft auf den Hebel 7 entgegen dem Uhrzeigersinn ausübt. Diese Kraft wird von dem Schnapphaken 15 am anderen Ende des Hebels 7 aufgenommen, so dass der Hebel 7 mechanisch fixiert ist und nicht klappern kann.

Zur Demontage des Kombiinstruments 2 wird ein Schraubendreher 17 oder ein ähnlich geformtes Werkzeug verwendet. Der Schraubendreher 17 wird durch ein Loch in der Zierleiste 18 und ein entsprechendes Loch 19 in der Instrumententafel 16 sowie durch das Loch 14 in dem Halterahmen 1 hindurchgeschoben, so dass die Spitze des Schraubendrehers 17 die Aufnahme 13 des Hebels 7 erreicht.

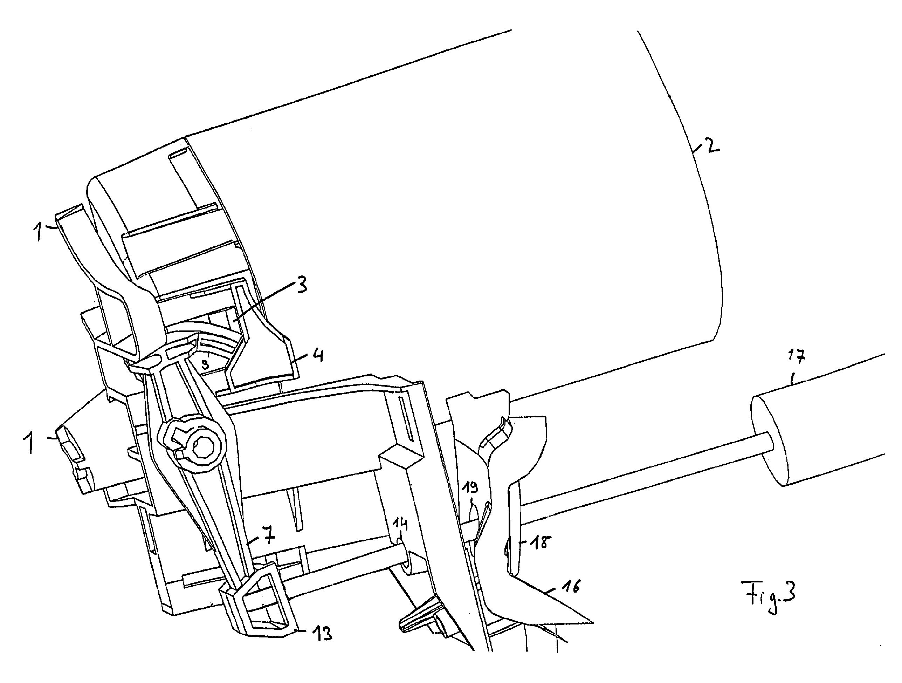

Über den Schraubendreher 17 kann ein Benutzer dann eine Betätigungskraft ausüben, die über die Aufnahme 13 auf den Hebel 7 wirkt. Durch diese Betätigungskraft erfolgt zunächst eine Entriegelung der Schnappverbindung. Dies ist in der Figur 3 dargestellt.

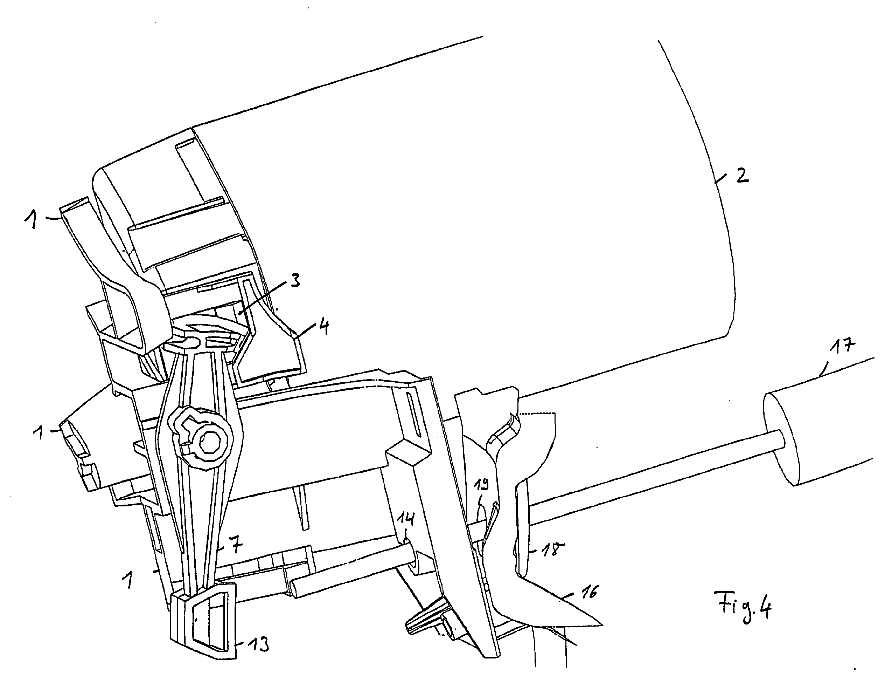

Die Figur 3 zeigt diesen Entriegelungszustand. Aufgrund der Betätigungskraft ist der Hebel 7 im Uhrzeigersinn gedreht worden, so dass die Anlaufschräge 11 (vgl. Figuren 1 und 2) unter den Klipp 4 gefahren ist. Aufgrund des Unterfahrens des Klipps 4 durch die Anlaufschräge 11 hat sich der Klipp 4 verformt, das heißt der Klipp 4 ist aufgebogen worden, so dass der Nocken 3 keinen Anschlag mehr an dem Klipp 4 bildet und somit die entsprechende Schnappverbindung gelöst worden ist. In dieser Position bildet der Quersteg 12 einen Anschlag an der Rückseite des Kombiinstruments 2, so dass nunmehr der Auswurf erfolgen kann. Dies ist in der Figur 4 dargestellt.

Die Figur 4 zeigt den Zustand nach dem Auswurf des Kombiinstruments 2. In diesem Zustand ist der Hebel 7 soweit im Uhrzeigersinn gedreht worden, dass praktisch der gesamte Betätigungsansatz 9 unter den Klipp 4 gefahren ist. Aufgrund dieser weiteren Drehbewegung hat der Quersteg 12 das Kombiinstrument 2 aus den Halterahmen ein Stück herausgeschoben, so dass das Kombiinstrument 2 vom Fahrzeuginnenraum aus bequem greifbar ist und aus dem Halterahmen 1 manuell herausgezogen werden kann. Der Schraubendreher 17 wird ebenfalls wieder herausgezogen.

Das Kombiinstrument 2 kann dann repariert werden oder gegen ein neues ausgetauscht werden. Beim Einschub des Kombiinstruments 2 wird der Hebel 7 entgegen dem Uhrzeigersinn wieder zurückgedreht. Diese Bewegung des Hebels 7 wird durch den Schnapphaken 15 begrenzt, so dass sich wieder der in der Figur 2 gezeigte Montagezustand des Kombiinstruments 2 einstellt.

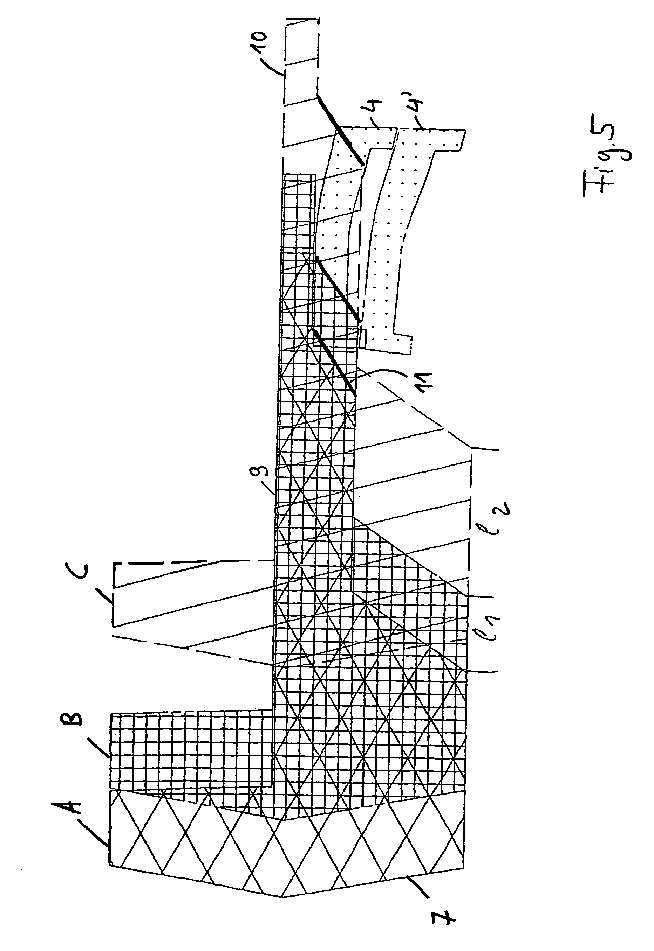

Die Figur 5 zeigt eine Abwicklung des Entriegelungs- und Auswurfvorgangs der Figuren 1 bis 4. In der mit A bezeichneten Grundstellung (vgl. Figur 2) befindet sich der Klipp 4 unmittelbar vor der Anlaufschräge 11. Der Klipp 4 liegt dabei auf dem Vorsprung 10 an.

Wird der Hebel 7 dann von der in der Figur 2 gezeigten Grundstellung in die Entriegelungsposition gedreht (vgl. Figur 3), so legt der Betätigungsansatz 9 des Hebels 7 die Entriegelungslänge I₁ zurück, das heißt der Klipp 4 fährt auf die Anlaufschräge 11 auf und befindet sich- dann in der mit 4' bezeichneten Position. Durch das Anheben des Klipps 4 wird die mit dem Nocken 3 gebildete Schnappverbindung entriegelt.

Wenn der Hebel von der Entriegelungsposition ausgehend zum Auswurf des Kombiinstruments weiter gedreht wird (vgl. Figur 4) so legt der Betätigungsansatz 9 dabei die Auswurflänge I₂ zurück. Um diese Auswurflänge von zum Beispiel 10 mm wird also das Kombiinstrument 2 herausgeschoben.

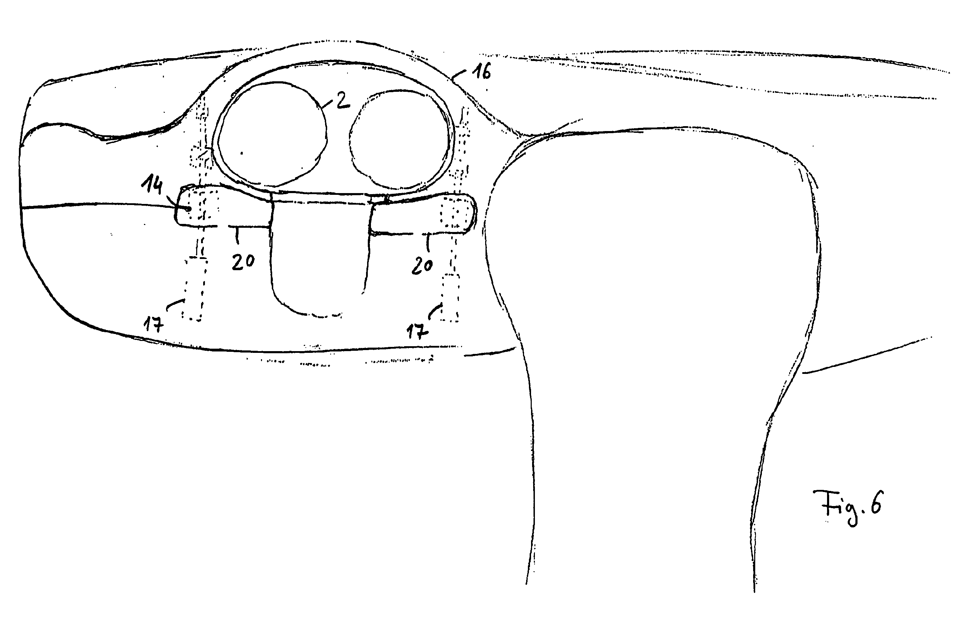

Die Figur 6 zeigt eine Draufsicht auf die Instrumententafel 16 mit dem eingebauten Kombiinstrument 2. Die mit Bezugnahme auf die Figuren 1 bis 5 erläuterte Vorrichtung ist dabei an beiden Seiten des Kombiinstruments 2 angeordnet. Entsprechend weist die Instrumententafel 16 auch zu beiden Seiten des Kombiinstruments 2 Löcher zum Einführen des Schraubendrehers 17 auf.

Abweichend zu der Ausführungsform der Figuren 1 bis 5 sind keine entsprechenden Löcher in der Zierleiste vorhanden, sondern die Löcher werden durch abnehmbare Zierleisten 20 verdeckt. Zur Demontage des Kombiinstruments 2 werden diese Zierleisten 20 beidseitig abgenommen. Dann wird im Wesentlichen gleichzeitig in die beiden freigelegten Löcher 14 ein Schraubendreher gesteckt und beidseitig eine Betätigungskraft durch Drücken auf die Schraubendreher 17 in Richtung auf die Instrumententafel 16 ausgeübt. Hierdurch wird die Schnappverbindung, die das Kombiinstrument 2 festhält, gelöst und das Kombiinstrument 2 wird aus der Instrumententafel 16 ein Stück weit herausgeschoben.

### Bezugszeichenliste

- Halterahmen: 1
- Kombiinstrument: 2
- Nocken: 3
- Klipp: 4
- Achse: 5
- Nase: 6
- Hebel: 7
- Nut: 8
- Betätigungsansatz: 9
- Vorsprung: 10
- Anlaufschräge: 11
- Quersteg: 12
- Aufnahme: 13
- Loch: 14
- Schnapphaken: 15
- Instrumententafel: 16
- Schraubendreher: 17
- Zierleiste: 18
- Loch: 19
- Zierleiste: 20

## Patentansprüche

1. Vorrichtung zum Halten eines Kombiinstruments (2) mit
- einer Halterung (1) für das Kombiinstrument, die zum Halten des Kombiinstruments mit einer Schnappverbindung ausgebildet ist, und
- Mitteln (5, 6, 7, 8, 9, 10, 11, 13, 14, 19) zur Lösung der Schnappverbindung (3, 4),
**dadurch gekennzeichnet, daß** die Vorrichtung
- Mitteln (5, 6, 7, 8, 12) zum Auswurf des Kombiinstruments in Richtung eines Fahrzeuginnenraums beinhaltet,
wobei die Mittel zur Lösung der Schnappverbindung und die Mittel zum Auswurf des Kombiinstruments von dem Fahrzeuginnenraum aus betätigbar sind.

2. Vorrichtung nach Anspruch 1, mit einem an der Halterung angeordneten ersten Schnappverbindungselement (4) zur Bildung der Schnappverbindung mit einem zweiten Schnappverbindungselement (3) des Kombiinstruments.

3. Vorrichtung nach Anspruch 2, bei der die Mittel zur Lösung der Schnappverbindung zur elastischen Verformung des ersten oder des zweiten Schnappverbindungselements für die Lösung der Schnappverbindung ausgebildet sind.

4. Vorrichtung nach Anspruch 2 oder 3, bei der die Mittel zum Auswurf des Kombiinstruments Mittel (5, 6, 7, 8) zum Umleiten einer aus dem Fahrzeuginnenraum eingeleiteten Betätigungskraft in die Auswurfrichtung des Kombiinstruments aufweisen.

5. Vorrichtung nach Anspruch 2, 3 oder 4, bei der die Mittel zur Lösung der Schnappverbindung und die Mittel zum Auswurf des Kombiinstruments einen Hebel (7) an einer Achse (5) der Halterung aufweisen, und der Hebel einen ersten Endbereich mit Mitteln (13) zur Einleitung einer Betätigungskraft von dem Fahrzeuginnenraum und einen zweiten Endbereich mit einem Betätigungsansatz (9) zur Verformung des ersten oder zweiten Schnappverbindungselements für die Lösung der Schnappverbindung bei einer Entriegelungsbewegung aufgrund der Betätigungskraft aufweist.

6. Vorrichtung nach Anspruch 5, bei der der Betätigungsansatz eine Anlauf-Schräge (11) zum Unterfahren des ersten oder des zweiten Schnappelements bei der Entriegelungsbewegung aufweist.

7. Vorrichtung nach Anspruch 5 oder 6, bei der der zweite Endbereich des Hebels einen Quersteg (12) zur Bildung eines Anschlages mit dem Kombiinstrument zur Einleitung einer Auswurfskraft aufweist.

8. Vorrichtung nach Anspruch 7, wobei die Anlauf-Schräge mit Bezug auf den Quersteg so angeordnet ist, dass der Anschlag nach der Entriegelungsbewegung gebildet wird.

9. Vorrichtung nach Anspruch 7 oder 8, mit einem Federelement im Bereich des Anschlags, wobei das Federelement einen Federweg von zumindest einer Entriegelungslänge der Entriegelungsbewegung aufweist.

10. Vorrichtung nach Anspruch 9, mit einem Anschlagelement (15) zur Bildung eines Anschlags mit dem Hebel in einer Montageposition des Kombiinstruments, so dass der Hebel durch das Federelement in der Montageposition gegen das Anschlagelement gedrückt wird.

11. Instrumententafel mit mindestens einer Vorrichtung nach einem der vorhergehenden Ansprüche 1 bis 10 und mit einem Loch (14, 19) für jede der Vorrichtungen zum Einführen eines Mittels (17) zum Einleiten einer Betätigungskraft von dem Fahrzeuginnenraum aus.

12. Instrumententafel nach Anspruch 11, wobei je eine Vorrichtung und ein Loch zu jeder Seite der Halterung für das Kombiinstrument angeordnet ist.

13. Instrumententafel nach Anspruch 11 oder 12 mit einer oder mehreren abnehmbaren Zierblenden (29) zur Abdeckung des oder der Löcher (19).

14. Instrumententafel nach Anspruch 11, 12 oder 13, mit einem Kombiinstrument (2), welches von der Vorrichtung gehalten wird.

15. Verfahren zur Demontage eines Kombiinstruments aus einer Instrumententafel, wobei das Kombiinstrument in der Instrumententafel mit einer Schnappverbindung befestigt ist, mit folgenden Schritten:
- Lösung der Schnappverbindung,
- Auswurf des Kombiinstruments in Richtung eines Fahrzeuginnenraums,
wobei eine Betätigungskraft für die Lösung der Schnappverbindung und für den Auswurf des Kombiinstruments von dem Fahrzeuginnenraum aus eingeleitet wird, und wobei zur Lösung der Schnappverbindung eine Entriegelungsbewegung mittels eines Hebels durchgeführt wird, der an einem ersten Endbereich Mittel zur Einleitung der Betätigungskraft von dem Fahrzeuginnenraum aus aufweist, und der an einem zweiten Endbereich einen Betätigungsansatz zur Verformung eines Schnappverbindungselements der Schnappverbindung für die Lösung der Schnappverbindung aufweist, und wobei der Auswurf des Kombiinstruments aufgrund einer Auswurfbewegung des Hebels nach der Lösung der Schnappverbindung erfolgt.

16. Verfahren nach Anspruch 15, wobei zur Einleitung der Betätigungskraft ein Gegenstand, wie zum Beispiel ein Schraubendreher, durch ein Loch in einer Instrumententafel bis zu dem ersten Endbereich des Hebels geführt wird.

## Claims

1. Device for mounting an instrument cluster (2) with
- a mounting (1) for the instrument cluster, which is developed to hold the instrument cluster with a snap connection, and
- appliances (5, 6, 7, 8, 9, 10, 11, 13, 14, 19) for releasing snap connection (3, 4),
wherein the device
- includes appliances (5, 6, 7, 8, 12) for ejecting the instrument cluster in the direction of a vehicle interior,
in which arrangement the appliances for releasing the snap connection and the appliances for ejecting the instrument cluster can be operated from the vehicle interior.

2. Device of Claim 1, with an initial snap connection element (4) arranged on the mounting to form the snap connection with a second snap connection element (3) of the instrument cluster.

3. Device of Claim 2, whereby the appliances for releasing the snap connection for the elastic deformation of the first or the second snap connection element are developed for releasing of the snap connection.

4. Device of Claim 2 or 3, whereby the appliances for the ejection of the instrument cluster feature appliances (5, 6, 7, 8) for diverting the operating force that is initiated from the vehicle interior in the direction of ejection of the instrument cluster.

5. Device of Claim 2, 3, or 4, whereby the appliances for releasing the snap connection and the appliances for ejecting the instrument cluster feature a lever (7) on an axis (5) of the mounting, and the lever features an initial end area with appliances (13) for initiating an operating force from the vehicle interior and a second end area with an actuating projection (9) for deformation of the first or second snap connection element for releasing the snap connection during an unlocking movement due to the operating force.

6. Device of Claim 5, whereby the actuating projection features a butting bevel (11) for underriding the first or second snap element during unlocking movement.

7. Device of Claim 5 or 6, whereby the second end area of the lever features a cross web (12) for forming a stop with the instrument cluster for initiating an ejection force.

8. Device of Claim 7, whereby the start-up bevel is arranged in relation to the cross web in such a way that the stop position is formed after the unlocking movement.

9. Device of Claim 7 or 8, with a spring element in the region of the stop, whereby the spring element features a range of spring of at least one unlocking length of the unlocking movement.

10. Device of Claim 9, with a stopping element (15) for forming a stop with the lever when the instrument cluster is in installation position, so that the lever is pressed against the stopping element by the spring element in installation position.

11. Dashboard with at least one device of one of the preceding Claims 1 through 10 with a hole (14, 19) for each of the devices for inserting an appliance (17) for initiating an operating force from the vehicle interior outward.

12. Dashboard of Claim 11, whereby one device and one hole each are arranged on either side of the mounting for the instrument cluster.

13. Dashboard of Claim 11 or 12 with one or more removable wheel shields (29) for covering the hole or holes (19).

14. Dashboard of Claim 11, 12, or 13, with an instrument cluster (2), which is held by the device.

15. Procedure for disassembling an instrument cluster from a dashboard, whereby the instrument cluster is fastened to the dashboard by a snap connection, using the following steps:
- releasing the snap connection,
- ejecting the instrument cluster in the direction of the vehicle interior,
whereby an operating force for releasing the snap connection and for ejecting the instrument cluster is initiated from the vehicle interior, and whereby an unlocking movement for releasing the snap connection is executed by means of a lever, which features an appliance on the first end area for initiating the operating force from the vehicle interior outward, and which features an activating projection on a second end area for deformation of a snap connection element of the snap connection for releasing the snap connection, and whereby the ejection of the instrument cluster occurs due to an ejection movement of the lever after release of the snap connection.

16. Procedure of Claim 15, whereby in order to initiate the operating force, an object such as a screwdriver is guided through a hole in a dashboard up to the first end area of the lever.

## Revendications

1. Dispositif de maintien d'un combiné d'instruments (2) comprenant
- une fixation (1) pour le combiné d'instruments, qui est réalisée avec un assemblage à encliquetage pour le maintien du combiné d'instruments, et
- des moyens (5, 6, 7, 8, 9, 10, 11, 13, 14, 19) pour le déblocage de l'assemblage à encliquetage (3, 4),
**caractérisé en ce que** le dispositif
comporte des moyens (5, 6, 7, 8, 12) pour l'éjection du combiné d'instruments en direction d'un habitacle de véhicule,
les moyens de déblocage de l'assemblage à encliquetage et les moyens d'éjection du combiné d'instruments étant actionnables à partir de l'habitacle du véhicule.

2. Dispositif suivant la revendication 1, comprenant un premier élément d'assemblage à encliquetage (4), monté sur la fixation, pour former l'assemblage à encliquetage avec un second élément d'assemblage à encliquetage (3) du combiné d'instruments.

3. Dispositif suivant la revendication 2, dans lequel les moyens de déblocage de l'assemblage à encliquetage sont réalisés pour la déformation élastique du premier ou du second élément d'assemblage à encliquetage pour débloquer cet assemblage.

4. Dispositif suivant l'une des revendications 2 et 3, dans lequel les moyens d'éjection du combiné d'instruments présentent des moyens (5, 6, 7, 8) pour dévier une force d'actionnement, déclenchée à partir de l'habitacle du véhicule, dans la direction d'éjection du combiné d'instruments.

5. Dispositif suivant l'une des revendications 2, 3 et 4, dans lequel les moyens de déblocage de l'assemblage à encliquetage et les moyens d'éjection du combiné d'instruments comportent un levier (7) sur un axe (5) de la fixation, et le levier présente une première zone d'extrémité avec des moyens (13), pour déclencher une force d'actionnement à partir de l'habitacle du véhicule, et une seconde zone d'extrémité avec un embout d'actionnement (9), pour la déformation du premier ou du second élément d'assemblage à encliquetage pour le déblocage de cet assemblage lors d'un mouvement de déverrouillage dû à la force d'actionnement.

6. Dispositif suivant la revendication 5, dans lequel l'embout d'actionnement présente un chanfrein de contact (11) pour passer au-dessous du premier ou du second élément d'encliquetage lors du mouvement de déverrouillage.

7. Dispositif suivant l'une des revendications 5 et 6, dans lequel la seconde zone d'extrémité du levier présente une traverse (12) pour former une butée avec le combiné d'instruments servant au déclenchement d'une force d'éjection.

8. Dispositif suivant la revendication 7, dans lequel le chanfrein de contact est disposé par rapport à la traverse de sorte que la butée est formée après le mouvement de déverrouillage.

9. Dispositif suivant l'une des revendications 7 et 8, comprenant un élément à ressort dans la zone de la butée, l'élément à ressort présentant une course d'élasticité d'au moins une longueur de déverrouillage du mouvement de déverrouillage.

10. Dispositif suivant la revendication 9, comprenant un élément de butée (15) pour former une butée avec le levier dans une position de montage du combiné d'instruments, de sorte que le levier est pressé par l'élément à ressort dans la position de montage contre l'élément de butée.

11. Tableau de bord comprenant au moins un dispositif suivant l'une des revendications précédentes 1 à 10 et un trou (14, 19) pour chacun des dispositifs, destiné à l'introduction d'un moyen (17) pour déclencher une force d'actionnement à partir de l'habitacle du véhicule.

12. Tableau de bord suivant la revendication 11, dans lequel un dispositif et un trou sont respectivement disposés de chaque côté de la fixation pour le combiné d'instruments.

13. Tableau de bord suivant l'une des revendications 11 et 12, comprenant un ou plusieurs enjoliveurs (29) amovibles pour masquer le ou les trous (19).

14. Tableau de bord suivant l'une des revendications 11, 12 et 13, comprenant un combiné d'instruments (2) maintenu par le dispositif.

15. Procédé de démontage d'un combiné d'instruments d'un tableau de bord, le combiné d'instruments étant fixé par un assemblage à encliquetage dans le tableau de bord, comprenant les étapes suivantes :
- déblocage de l'assemblage à encliquetage,
- éjection du combiné d'instruments en direction de l'habitacle du véhicule,
selon lequel une force d'actionnement pour le déblocage de l'assemblage à encliquetage et pour l'éjection du combiné d'instruments est déclenchée à partir de l'habitacle du véhicule, un mouvement de déverrouillage pour le déblocage de l'assemblage à encliquetage est effectué au moyen d'un levier, qui présente sur une première zone d'extrémité des moyens pour déclencher la force d'actionnement à partir de l'habitacle du véhicule, et sur une seconde zone d'extrémité un embout d'actionnement pour la déformation d'un élément d'assemblage à encliquetage de l'assemblage à encliquetage pour le déblocage de cet assemblage, et selon lequel l'éjection du combiné d'instruments s'effectue en raison d'un mouvement d'éjection du levier après le déblocage de l'assemblage à encliquetage.

16. Procédé suivant la revendication 15, selon lequel un objet, tel que par exemple un tournevis, est guidé pour le déclenchement de la force d'actionnement au travers d'un trou d'un tableau de bord jusqu'à la première zone d'extrémité du levier.
